Europäisches Patentamt

European Patent Office

Office européen des brevets

(19)

(11) Veröffentlichungsnummer: **0 001 779**
**B1**

(12) # EUROPÄISCHE PATENTSCHRIFT

(45) Veröffentlichungstag der Patentschrift: **10.03.82**

(21) Anmeldenummer: **78101153.1**

(22) Anmeldetag: **14.10.78**

(51) Int. Cl.³: **C 09 D 3/74,** C 09 D 5/00,
C 08 L 25/00, E 01 F 9/08

(54) Bindemittel für Beschichtungsstoffe und Strassenmarkierungsfarben.

(30) Priorität: **05.11.77 DE 2749625**
**15.03.78 DE 2811187**

(43) Veröffentlichungstag der Anmeldung: ,
**16.05.79 Patentblatt 79/10**

(45) Bekanntmachung des Hinweises auf die Patenterteilung:
**10.03.82 Patentblatt 82/10**

(84) Benannte Vertragsstaaten:
**BE CH DE FR GB NL SE**

(56) Entgegenhaltungen:
**DE - A - 2 448 806**
**FR - A - 2 261 325**

(73) Patentinhaber: **BASF Aktiengesellschaft**
**Carl-Bosch-Strasse 38**
**D-6700 Ludwigshafen (DE)**

(72) Erfinder: **Neubert, Gerhard, Dr.**
**Panoramastrasse 11**
**D-6719 Battenberg (DE)**
Erfinder: **Jaeckel, Klaus-Peter, Dr.**
**Am Sonnengarten 13**
**D-6800 Mannheim 1 (DE)**

Courier Press, Leamington Spa, England.

# 0 001 779

## Bindemittel für Beschichtungsstoffe und Straßenmarkierungsfarben

Die vorliegende Erfindung betrifft Bindemittel für physikalisch trocknende Beschichtungsstoffe zur Beschichtung von Metallen, mineralischen Werkstoffen, Kunststoffen, faserhaltigen Werkstoffen und Straßenmarkierungsfarben.

An derartige Bindemittel werden eine Reihe schwer zu erfüllender, oft widersrpüchlicher Eingenschaftsanforderungen gestellt. Die Bindemittel sollen nach dem Auftrocknen aus Lösung dem Beschichtungsstoff möglichst gute mechanische Eigenschaften, wie z.B. hohe Filmhärte, hohe Kohäsion und gute Flexibilität sowie sehr gute Haftfestigkeit auf den verschiedensten Sunstraten verleihen. Außerdem sollen sie erst bei möglichst hohen Temperaturen erweichen und bis zu möglichst tiefen Temperaturen flexibel bleiben. Auf der anderen Seite aber soll zu ihrer Verarbeitung als Beschichtungsstoff möglichst wenig Lösungsmittel eingesetzt werden, um Kosten zu sparen und die Umweltbelastung durch flüssige Lösungsmittel so gering wie möglich zu halten. Die mechanischen Eigenschaften der Copolymerisate hängen aber von ihrem Molekulargewicht ab. Zur Verringerung des Lösungsmittelbedarfs kann das Molekulargewicht daher nicht beliebig gesenkt werden. Das Bindemittel würde sonst zu spröde und thermoplastisch. Bei Verwendung für Straßenmarkierungsfarben ist außerdem darauf zu achten, daß bei der Verarbeitung aus der Schmelze die Bindemittel bei Temperaturen von etwa 180 bis 220°C über mehrere Stunden auch bei Einwirkung von Luftsauerstoff möglichst wenig vergilben sollen, um die Tages- und Nachtsichtbarkeit der daraus hergestellten Markierungen nicht zu beeinträchtigen; ihre Schmelze soll im Temperaturbereich von etwa 130 bis 200°C eine möglichst niedrige Viskosität aufweisen, damit sich die daraus hergestellten Markierungsmassen bei möglichst niedriger Temperatur verarbeiten lassen und auf der Straßendecke eine möglichst hohe Haftfestigkeit aufweisen. Dies gilt in ganz besonderem Maße, wenn die Massen im Spritzverfahren verarbeitet werden sollen. Die Markierungen müssen außerdem witterungsbeständig sowie gegen Wasser und Salzwasser beständig sein. Sie sollen ferner ein hohes Pigmentbindevermögen aufweisen, damit möglichst hohe Anteile kostengünstiger Füllstoffe eingesetzt werden können. Die Adhäsion zu Glasperlen und harten Füllstoffe muß hoch sein, damit die Nachtsichtbarkeit, die Abriebfestigkeit und die Griffigkeit der Markierungen über eine möglichst lange Gebrauchsdauer erhalten bleibt. Außerdem muß das Bindemittel der Markierungsfarbe bzw. -masse eine hohe Kohäsion und eine ausreichende Elastizität vermitteln, damit die Markierungen abreibfest sind und auch bei kalter Witterung nicht spröde werden und Risse bilden. Andererseits sollen die Markierungen bei warmer Witterung nicht so stark erweichen, daß sie plastisch werden und verschmutzen.

In der DE—OS 24 07 159 werden zwar Bindemittel mit hoher Hitzevergilbungs- und Witterungsbeständigkeit beschrieben. Sie werden jedoch im wesentlichen als lösungsmittelfreie Produkte aus der Schmelze appliziert. Das vorliegende Problem, Bindemittel herzustellen, die die widersprüchlichen Eigenschaften einer niedrigen Lösungsviskosität, hoher Kohäsion, geringer Thermoplastizität, ausreichender Druckfestigkeit und Verschmutzungsresistenz in sich vereinen, konnte damit bischer jedoch nicht befriedigend gelöst werden.

Diese Produkte sind nicht ausreichend blockfest und benötigen deshalb eine verhältnismäßig kostspielige Verpackung. Ihre Herstellung und Verarbeitung ist aufwendig, weil sowohl ihr Bindemittel als auch die fertigen Massen vor ihrer Verarbeitung verkleben und verblocken.

Der vorliegenden Erfindung lag nun die Aufgabe zugrunde, ein Bindemittel für Beschichtungsstoffe zur Beschichtung von Metallen, mineralischen und faserhaltigen Werkstoffen und Konststoffen sowie Straßenmarkierungsfarben aufzuzeigen, das die oben erwähnten zum Teil widersprüchlichen Eigenschaftsmerkmale in optimaler Weise in sich vereint.

Gegenstand der vorliegenden Erfindung sind Bindemittel für physikalisch aus organischer Lösung auftrocknende oder aus der heißen Schmelze aufzubringende Beschichtungsstoffe zur Beschichtung von Metallen, Kunststoffen sowie faserhaltigen und mineralischen Werkstoffen auf der Basis von carboxylgruppenhaltigen Vinylaromat-Copolymerisaten, die dadurch gekennzeichnet sind, daß das Bindemittel ein Copolymerisat ist aus

a) 60 bis 95 Gew.% eines Vinylaromaten,
b) 2 bis 20 Gew.% mindestens einer copolymerisierbaren $\alpha,\beta$-olefinisch ungesättigten Carbonsäure oder eines Halbesters $\alpha,\beta$-olefinisch ungesättigter Dicarbonsäuren mit 1 bis 18 Kohlenstoffatome enthaltenden Monoalkanolen und
c) 0 bis 35 Gew.% mindestens eines Esters der Acrylsäure und/oder Methacrylsäure mit 1 bis 12 Kohlenstoffatome enthaltenden Monoalkanolen,

wobei die Summe der unter a) bis c) genannten Prozentzahlen gleich 100 ist.

Bevorzugt sind solche Bindemittel, die eine Säurezahl zwischen 10 und 50 sowie einen Erweichungspunkt nach Krämer-Sarnow-Nagel (=KSN) von 100 bis 140°C aufweisen. Für physikalisch aus organischer Lösung auftrocknende Beschichtungsstoffe werden Copolymerisate mit K—Werten (nach Fikentscher: Cellulosechemie *13*, 58 (1932)) von mindestens 30 bevorzugt, für aus der Schmelze zu verarbeitende Straßenmarkierungsfarben dagegen solche mit niedrigem K—Wert.

2

Gegenstand der vorliegenden Erfindung sind ferner Bindemittel, die 15 bis 30 Gew.% der Komponente c einpolymerisiert enthalten.

Zur Herstellung von Straßenmarkierungsfarben wird dem Copolymerisat Weichmacher zugesetzt.

Gegenstand der vorliegenden Erfindung ist außerdem die Verwendung dieser Bindemittel zubereitungen für Straßenmarkierungsfarben, die aus 60 bis 90 Gew.% mindestens eines Pigments und/oder anorganischen Füllstoffs und 10 bis 40 Gew.-% des Gemisches aus Copolymerisat und Weichmacher bestehen.

Eine bevorzugte Ausführungsform der Erfindung besteht außerdem darin, daß dem Copolymerisat Weichmacher in Mengen von 15 bis 80, vorzugsweise 25 bis 60 Gew.%, bezogen auf das Copolymerisat, zugefügt wird.

Mit dem erfindungsgemäßen Bindemittel lassen sich Beschichtungsstoffe mit besonders guten mechanischen Eigenschaften, wie z.B. hoher Filmhärte, hoher Kohäsion, guter Flexibilität, guter Block- und Wärmedurckfestigkeit sowie sehr guter Adhäsion zu den verschiedensten Substraten herstellen. Darüber hinaus zeichnen sich die damit hergestellten Beschichtungen durch sehr gute Vergilbungsbeständigkeit bei langzeitiger Beanspruchung im Wetter oder in der Wärme aus und gewährleisten gleichzeitig einen hervorragenden Schutz für das Substrat gegen Korrosion. Die gute Pigmentbenetzung ermöglicht die Herstellung hochglänzender Deckbeschichtungen. Diese guten Eigenschaften lassen sich schon mit verhältnismäßig niedrig-molekularen Polymerisaten erreichen, so daß zur Anwendung der damit hergestellten Beschichtungsstoffe nur verhältnismäßig wenig Lösungsmittel eingesetzt werden muß. Dadurch können Kosten eingespart werden und die Umweltbelastung durch Lösungsmittel gering gehalten werden.

Die erfindungsgemäßen Straßenmarkierungsfarben weisen neben besonders guter Abriebbeständigkeit, Haftfestigkeit auf Beton und Asphalt und Hitzevergilbungsbeständigkeit sehr hohe Erweichungspunkte vor ihrer Verarbeitung mit Weichmachern auf, wodurch die Produkte bis mindestens 50°C blockfest sind und unter Zusatz eines Weichmachers leicht verarbeitet werden können.

Darüber hinaus zeichnen sich die erfindungsgemäßen Bindemittel durch besonders hohe Schlagfestigkeit und Druckfestigkeit (Eindringhärte) aus. Dies verleiht den Straßenmarkierungsfarben hohe Widerstandsfähigkeit gegenüber Belastungen. Ein weiterer Vorteil bei der Verarbeitung dieser Straßenmarkierungsfarben aus der Schmelze ist ihre niedrige Schmelzviskosität nach Zusatz eines Weichmachers, was zu niedrigeren Verarbeitungstemperaturen und damit zur Energiekostenersparnis führt. Weiterhin weisen die erfindungsgemäßen Straßenmarkierungsfarben nur geringe Geruchsbelastigung bei Verarbeitung aus der Schmelze und geringere Herstellungskosten auf als die in der DE—OS 24 07 159 beschriebenen Produkte.

Zu den Aufbaukomponenten des erfindungsgemäß als Bindemittel zu verwendenden Copolymerisats ist folgendes auszuführen:

a) Als Vinylaromaten eignen sich Styrol und Vinyltoluol, insbesondere Styrol, die im Copolymerisat in einer Menge von 60 bis 95, vorzugsweise 60 bis 80, für Straßenmarkierungsfarben insbesondere 70 bis 90 Gew.% einpolymerisiert sind.

b) Als Komponente b) kommen $\alpha,\beta$-olefinisch ungesättigte Carbonsäuren, wie Mono- und Dicarbonsäuren mit 3 bis 5 Kohlenstoffatomen, z.B. Acrylsäure, Methacrylsäure, Crotonsäure, Maleinsäure, Fumarsäure und Itaconsäure sowie Dicarbonsäuremonoester in Frage, wie die Halbester von Maleinsäure und Fumarsäure mit 1 bis 18 Kohlenstoffatome enthaltenden Monoalkanolen wie z.B. Malein- oder Fumarsäuremonomethyl-, äthyl-, propyl-, n-butyl-, iso-butyl-, hexyl-, octyl-, n-decyl-, isodecyl-, lauryl-, stearyl- und äthylhexylester. Besonders bevorzugt sind Maleinsäure-n-butyl-, iso-butyl- und iso-decylhalbester. Desgleichen eignen sich Gemische aus den genannten ungesättigten Carbonsäuren und Dicarbonsäuremonoestern.

Komponente b) ist im Copolymerisat in einer Menge von 2 bis 20, vorzugsweise 5 bis 15 Gew.%, einpolymerisiert. Die Säurezahl des Copolymerisats liegt im allgemeinen zwischen 10 und 50, vorzugsweise zwischen 25 und 40.

c) Als Ester der Acryl- oder Methacrylsäure kommen solche mit 1 bis 12 Kohlenstoffatomen enthaltenden Monoalkanolen in Frage, wie z.B. Methyl-, Äthyl-, Propyl-, n-Butyl-, so-Butyl-, Hexyl-, 2-Äthylhexyl-, Octyl- und Laurylester der Acryl- bzw. Methacrylsäure, vorzugsweise n-Butyl- und iso-Butylacrylat. Monomere der Komponente c) sind in einer Menge von 0 bis 35, vorzugsweise 10 bis 30, insbesondere 15 bis 30 Gew.% in Bindemittel einpolymerisiert.

Beispiele für bevorzugt als Bindemittel geeignete Copolymerisate sind Mischpolymerisate aus 60 bis 80 Gew.% Styrol, 5 bis 15 Gew.% Maleinsäure-n-butyl- bzw. iso-butylhalbester und 15 bis 25 Gew.% n- bzw. iso-butylacrylat, bzw. bei Verwendung für Straßenmarkierungsfarben Mischpolymerisate aus 70 bis 90 Gew.% Styrol, 5 bis 15 Gew.% Maleinsäure-n-butyl- bzw. iso-butylhalbester und 0 bis 25 Gew.% n- bzw. iso-Butylacrylat.

Die erfindungsgemäß als Bindemittel verwendbaren Copolymerisate können nach verschiedenen üblichen Polymerisationsverfahren, beispielsweise durch Lösungspolymerisation, durch Perlpolymerisation oder durch Substanzpolymerisation unter Siedekühlung hergestellt werden. Die Erweichungspunkte (nach KSN) der erfindungsgemäß zu verwendenden Bindemittel liegen im allgemeinen über 80°C, vorzugsweise zweischen 90 und 170, insbesondere zwischen 100 und 140°C.

Die Flexibilität und Dehnbarkeit der erfindungsgemäßen Polymerisatbindemittel kann durch Modifizieren mit einem oder mehreren Weichmachern in weiten Grenzen abgeändert werden. Gleichzeitig läßt sich dadurch die Erweichungstemperatur der Beschichtungen erniedrigen, beispielsweise um die Siegelbarkeit von Überzügen zu verbessern. Die erfindungsgemäßen Bindemittel lassen sich mit verhältnismäßig hohen Anteilen Weichmacher von z.T. bis zu 80% plastifizieren, ohne daß die Beschichtungen an der Oberfläche klebrig werden und zur Verschmutzung neigen. Dadurch wird eine weitere Kostenersparnis für die daraus hergestellten Beschichtungsstoffe durch Einsparung von flüchtigen Lösungsmitteln und Anwendung preisgünstiger Weichmacher möglich.

Zur Verringerung der Schmelzviskosität bei Verarbeitungstemperatur und zur Einstellung der gewünschten Gebrauchseigenschaften von Straßenmarkierungsfarben, wie z.B. Kohäsion, Schlagfestigkeit, Druckfestigkeit und Erweichungstemperatur, werden dem erfindungsgemäßen Polymerisatbindemittel zweckmäßigerweise 15 bis 80, vorzugsweise 25 bis 60 Gew.% eines oder mehrerer verträglicher Weichmacher zugesetzt.

Weichmacher mit sehr gutem Gelatiniervermögen für das Polymerisatharz und geringer Flüchtigkeit bei Verarbeitungstemperatur und einer Erstarrungstemperatur möglichst weit unter 0°C eignen sich dafür besonders. Beispiele für solche Weichmacher sind Phthalsäureester mit einem Molekulargewicht über 400, wie z.B. o-Phthalsäureester von n- und iso-Nonyl-, Decyl- und Undecylalkohol sowie deren Gemische. Weniger gut gelatinierende Weichmacher, wie z.B. Chlorparaffine, können ebenfalls in größeren Mengen zugesetzt werden. Begrenzt verträgliche und unverträgliche Weichmacher können anteilsweise mitverwendet werden. Solche Weichmacher sind z.B. hochmolekulare Adipinsäure- oder Sebacinsäureester, pflanzliche oder tierische Fette oder Öle oder mineralische Öle.

Weicht man von der Zusammensetzung der erfindungsgemäßen Bindemittel ab, so gehen die beschriebenen guten Eigenschaften der Beschichtungsstoffe verloren.

Ersetzt man beispielsweise die äußere Plastifizierung des Polymerisats durch eine innere Plastifizierung durch Copolymerisation mit höheren Anteilen an innerlich plastifizierenden Comonomeren c), wie z.B. n-Butylacrylat, so werden die mechanischen Eigenschaften der Beschichtungsstoffe bei vergleichbarem Molekulargewicht bzw. gleichem K—Wert schlechter. Wenn der Anteil an Comonomeren b) reduziert wird, nehmen ebenfalls die mechanischen Eigenschaften der Beschichtungen ab. Außerdem wird die Adhäsion zu den meisten Substraten geringer oder unzureichend. Umgekehrt führt eine Erhöhung des Anteils der Comonomeren b) zu Produkten, die mit vielen der üblichen Weichmacher, wie z.B. den oben aufgeführten Phthalsäureestern, zunehmend unverträglicher werden und sich nicht mehr ausreichend plastifizieren lassen. Gleichzeitig wird die Wasserresistenz der Beschichtungen für die meisten Anwendungen zu gering. Die Verträglichkeit des erfindungsgemäß zu verwendenden Copolymerisats mit Weichmachern bzw. seine Löslichkeit in üblichen Lösungsmitteln wird außerdem über den Anteil an Comonomer c) positiv beeinflußt. So wird eine ausreichende Verträglichkeit mit vielen Weichmachern in der zur Plastifizierung erforderlichen Menge, wie insbesondere mit den oben beschriebenen Phthalsäureestern erst dann erreicht, wenn der Comonomergehalt von c) mehr als 15 Gew.% beträgt. Die Comonomeren c) werden daher bevorzugt in einer Menge von 15 bis 30% in das Copolymerisat einpolymerisiert. K-Werte von über 30 sind bevorzugt.

Für besonders zähe, harte oder flexible Beschichtungen, wie sie z.B. für Metall- bzw. Kunststoffolien und Gewebe erforderlich sind, werden die erfindungsgemäßen Bindemittel mit hohem K-Wert (nach Fikentscher) von über 50 bzw. ca. 60 hergestellt. Für Beschichtungen auf starren Untergründen reichen dagegen oft schon K-Werte um 20 aus, um die gewünschten mechanischen Eigenschaften in den Beschichtungen zu erreichen.

Die erfindungsgemäßen Bindemittel können sowohl zur Herstellung von Klarlackbeschichtungen wie auch für pigmentierte Anstrichstoffe eingesetzt werden.

Als Pigmente und Füllstoffe, z.B. für die Straßenmarkierungsfarben, eignen sich die üblicherweise für Carboxylgruppen enthaltende Bindemittel verwendeten Stoffe, wie z.B. Anatas, Rutil, Kristobalit, Quarz, Calzite, Dolomite, Miskovitglimmer, Schwerspat, Kieselgur, Glasperlen, Bimsmehl, Talkum und Mischungen dieser Stoffe verschiedener Korngrößenbereiche.

Die Verarbeitung und Anwendung der erfindungsgemäßen Bindemittel erfolgt in der für physikalisch trocknende Beschichtungsstoffe üblichen Verfahrensweise über die Herstellung einer Lösung in organischen Lösungsmitteln und anschließendem Pigmentieren. Als Lösungsmittel eignen sich beispielsweise Mischungen aus aromatischen Kohlenwasserstoffen, wie z.B. Toluol und Xylol, Estern, wie Äthyl- und Butylacetat und Ketonen, wie Aceton und Methylisobutylketon mit Alkoholen, wie Isopropanol und Butanole.

Für die Straßenmarkierungsfarben werden Pigmente und Füllstoffe im allgemeinen in Mengen von 60 bis 90 Gewichtsteilen mit 10 bis 40 Gewichtsteilen Bindemittel zubereitung (= Copolymerisat + Weichmacher) kombiniert. Den Straßenmarkierungsfarben können außerdem Hilfsstoffe, wie z.B. Antiabsetzmittel, Haftmittel, Dispergiermittel und Lösungsmittel zugesetzt werden.

Die Herstellung der Markierungsmassen aus den aufgeführten Bestandteilen erfolgt in bekannter Weise unter Verwendung üblicher Mischaggregate, wie z.B. durch Abmischen und Aufschmelzen. Um den Schmelzvorgang zu erleichtern und zu beschleunigen, können die festen Bestandteile in den vorerwärmten Weichmacher eingerührt werden. Die Herstellung der gebrauchsfertigen Schmelze aus den

4

flüssigen und den festen Komponenten kann direkt am Ort der Verarbeitung der Markierungsmasse erfolgen.

Die Verarbeitung der Schmelze erfolgt in bekannter Weise, z.B. durch Verspritzen oder, bei höher viskosen Schmelzen z.B. durch Aufziehen mit dem Ziehschuh oder Auspressen aus einer Schlitzdüse.

Eine andere Möglichkeit der Verarbeitung besteht darin, die erfindungsgemäße Masse unter Mitverwendung von flüchtigen Lösungsmitteln, wie z.B. aromatischen Kohlenwasserstoffen, Estern, Ketonen, Alkoholen oder deren Gemischen in bekannter Weise als Markierungsfarbe zu verarbeiten. So hergestellte Farben zeichnen sich gegenüber den mit bekannten Bindemitteln hergestellten Farben insbesondere dadurch aus, daß sie trotz geringem Lösungsmittelgehalt und daher größerer Umweltfreundlichkeit bessere mechanische Eigenschaften und daher längere Haltbarkeit und bessere Verschmutzungsresistenz aufweisen.

Die in den folgenden Beispielen angegebenen Teile und Prozente sind Gewichtsteile bzw. Gewichtsprozente.

## Beispiel 1

100 Teile eines Suspensionspolymerisats aus 70 Teilen Styrol, 20 Teilen i-Butylacrylat und 10 Teilen Maleinsäuremonobutylester mit einem K-Wert von 38,1 (gemessen 1 %ig in Tetrahydrofuran) und einem Erweichungspunkt nach KSN von 125°C werden in 200 Teilen eines Lösungsmittelgemisches aus Toluol und Isopropanol im Mengenverhältnis von 9/1 bei Raumtemperatur unter Rühren gelöst. Der Lösung werden nacheinander unter kräftigem Rühren folgende Stoffe zugesetzt:

32 Teile eines handelsüblichen Weichmachers auf der Basis von o-Phthalsäureestern mit $C_9$- bis $C_{11}$-Alkoholen
3,3 Teile pyrogene Kieselsäure
80 Teile Rutil
40 Teile Microcalcit
200 Teile Quarzmehl 0,01 bis 0,09 mm Durchmesser
240 Teile Quarzkorn 0,2 bis 0,4 mm Durchmesser

Der erhaltene Anstrichstoff eignet sich für physikalisch trocknende Beschichtungen auf Metallen, starren mineralischen Werkstoffen und Kunststoffen. Die Beschichtungen zeichnen sich durch sehr hohe Verschleißbeständigkeit gegen Abrieb verursachende Beanspruchungen sowie sehr gute Beständigkeit gegen Witterungs- und Umwelteinflüsse aus.

Zum Nachweise der mechanischen Eigenschaften und der Verschleißbeständigkeit des Beschichtungsstoffes werden Platten aus Aluminium und Asbestzement mit dem Anstrichstoff beschichtet. Die Beschichtung trocknet innerhalb von 1 Stunde in einer Naßschichtdicke von 1.0 mm bei 23°C durch. Die Verschleißbeständigkeit wird durch Strahlen mit Korund von ca. 0,3 mm Durchmesser in einem Winkel von 40° bei 4,5 bar und Bestimmung des Gewichtsverlusts an den lösungsmittelfrei durchgetrockneten Beschichtungen bestimmt.

Die Prüfergebnisse sind in Tabelle 1 zusammengefaßt.

## Beispiel 2

Entfettete Tiefziehbleche werden mit der Lösung des mit 25% flüssigen Chlorparaffin (50% Chlorgehalt) bzw. 25% flüssigen Chlorparaffin und zusätzlich 5% flüssigen 4,4'-Dihydroxydiphenylpropandiglycidäther (Epoxidäquivalent ca. 190) plastifizierten Copolymerisats aus Beispiel 1 in einer Trockenfilmdicke von 0,04 mm beschichtet und 7 Tage bei 23°C getrocknet. Die so behandelten Bleche werden in Trinkwasser getaucht, durch das gleichzeitig ein kräftiger Luftstrom geleitet wird. Während unbeschichtete Blechteile bereits nach 1 Stunde starke Rostbildung zeigen, sind an der Blechoberfläche unter den Beschichtungen auch nach 2 Wochen Wasserbeanspruchung noch keine Zeichen von Korrosion zu erkennen.

## Beispiel 3

100 Teile eines Lösungspolymerisats mit gleicher Monomerzusammensetzung wie in Beispiel 1 und K-Wert 38,6 werden gelöst, pigmentiert und als Klarlack und als Anstrichstoff geprüft.
Prüfergebnisse siehe Tabelle 1.

## Beispiel 4

100 Teile eines Suspensionspolymerisats mit gleicher Monomerenzusammensetzung wie in Beispiel 1, jedoch einem K-Wert von 55,7, werden in 300 Teilen eines Lösungsmittelgemisches aus Toluol und Isopropanol bei Raumtemperatur gelöst. Nach 1 Woche Trockendauer bei 23°C an der Luft auf Tiefziehblech und Glas werden die Kennwerte in Tabelle 1 gemessen. Die so hergestellten Lackfilme sind schon ohne Weichmacherzusatz zäh, flexibel und knickfest.

## Vergleichsbeispiel A

Zum Vergleich wird eine Lösung eines innerlich plastifizierten Copolymerisats aus 45 Teilen Styrol, 51 Teilen Butylacrylat und 4 Teilen Acrylsäure mit einem K-Wert von 38,6 hergestellt und wie in Beispiel 1 gelöst und pigmentiert. Es wird jedoch kein Phthalat-Weichmacher mitverwendet.

# 0 001 779

Die Prüfergebnisse sind in Tabelle 1 enthalten.

## Vergleichsbeispiel B

Als weiterer Vergleich wird ein Copolymerisat aus 80 Teilen Styrol und 20 Teilen Isobutylacrylat mit K-Wert 38, 1 hergestellt und wie in Beispiel 1 gelöst und pigmentiert. Zur Plastifizierung werden auf 100 Teile Copolymer 25 Teile des Phthalatweichmachers aus Beispiel 1 zugesetzt.

Die Prüfergebnisse sind in Tabelle 1 enthalten.

## TABELLE 1

Kennwerte der Klarlacke und der pigmentierten Beschichtungen aus Beispiel 1, 3, 4 sowie der Vergleichsbeispiele A und B

|  | Beispiel Nr. | | | Vergleichsbeispiele | |
|---|---|---|---|---|---|
|  | 1 | 3 | 4 | A | B |
| K-Wert | 38,1 | 38,6 | 55,7 | 38,6 | 38,1 |
| Zusatz zum Polymerisatbindemittel |  |  |  |  |  |
| a) Weichmacher (%) | 32 | 32 | 32 | 0 | 25 |
| b) Lösungsmittel (%) | 200 | 200 | 300 | 200 | 200 |
| I. Klarlacke: |  |  |  |  |  |
| Viskosität der Lösung [+] | 60s | 62s | 300s | 50s | 60s |
| Pendeldämpfungswerte nach König für 0,04 mm Trockenfilmdicke |  |  |  |  |  |
| a) plastifiziert | 35s | 35s | 40s |  | 35s |
| b) ohne Weichmacher | 210s | 210s | 210s | 35s | 120s |
| II. Pigmentierte Beschichtungen: |  |  |  |  |  |
| Gewichtsverlust der pigmentierten Beschichtung nach 60s Strahlen mit Korund in g [++] |  |  |  |  |  |
| a) trocken | 2,0 | 2,1 |  | 5,0 | über 10 |
| b) nach 3 Tagen Wasserlagerung | 3,0 | 3,3 |  | 8,0 | über 10 |
| Beschichtungsmenge in g /m², trocken | 370 | 360 |  | 390 | 380 |

Alle Beschichtungen sind vor der Prüfung 7 Tage bei 23°C gelagert, um den Einfluß von Restlösungsmittel auf die Kennwerte auszuschließen.

[+] Auslaufzeit DIN-Becher 4, 23°C (DIN 53 211).

[++] = Relativwerte unter gleichen Strahlbedingungen.

## Beispiel 5

Herstellung eines Bindemittels für Straßenmarkierungsfarben.

Eine Mischung aus 70 Teilen Styrol, 20 Teilen i-Butylacrylat, 10 Teilen Maleinsäuremono-n-butylester und 2 Teilen tert.-Dodecylmercaptan werden in ein Zulaufgefäß gefüllt. Ein zweites Zulaufgefäß enthält 2,25 Teile tert.-Butylperbenzoat. Je 10% der Zuläufe 1 und 2 werden im Reaktionsgefäß vorgelegt und unter Rühren auf 130°C erhitzt. Während 2 Stunden läßt man den Rest der Zuläufe 1 und 2 zutropfen und stellt die Reaktionstemperatur mittels Unterdruck so ein, daß sie 140°C nicht überschreitet. Anschließend wird noch 1 Stunde unter vermindertem Druck (400 bis 500 mbar) nachpolymerisiert. Die noch vorhandenen Restmonomeren destilliert man danach bei 13 mbar/145°C ab.

Die Kenndaten des Mischpolymerisats sind in Tabelle 2 aufgeführt. Als Vergleichsprodukt C wird das in Beispiel 5 der DE—OS 24 07 159 beschriebene Bindemittel herangezogen. Vergleichsprodukt C besteht aus 50 Teilen n-Butylacrylat, 45 Teilen Styrol und 5 Teilen Acrylsäure.

Beispiel 6

Ein Gemisch aus 70 Teilen Styrol, 20 Teilen i-Butylacrylat, 10 Teilen Maleinsäuremonoisodecylester und 2 Teilen tert.-Dodecylmercaptan werden in ein Zulaufgefäß gegeben. Ein zweites Zulaufgefäß enthält 2,25 Teile tert.-Butylperbenzoat. Polymerisation und Aufarbeitung erfolgt wie unter Beispiel 5 beschrieben. Kenndaten des Bindemittels s. Tabelle 2.

Beispiel 7

In einem Zulaufgefäß werden 80 Teile Styrol, 10 Teile i-Butylacrylat, 10 Teile Maleinsäuremono-n-butylester und 2 Teile tert.-Dodecylmercaptan gemischt. 2,25 Teile ter.-Butylperbenzoat als Initiator befinden sich in einem zweiten Zulaufbehälter. Die Reaktion wird wie unter Beispiel 5 beschrieben durchgeführt. Kenndaten s. Tabelle 2.

Beispiel 8

70 Teile Styrol, 25 Teile n-Butylacrylat, 5 Teile Acrylsäure und 2 Teile tert.-Dodecylmercaptan werden gemischt und in ein Zulaufgefäß gegeben. In ein zweites Zulaufgefäß füllt man 2,25 Teile tert.-Butylperbenzoat. Die Durchführung der Polymerisation erfolgt wie unter Beispiel 5 beschrieben. Kenndaten s. Tabelle 2.

TABELLE 2

Kenndaten der Bindemittel aus den Beispielen 5 bis 9 und Vergleichsprodukt C

| | Beispiel 5 | Beispiel 6 | Beispiel 7 | Beispiel 8 | Beispiel 9 | Vergleichsprodukt C |
|---|---|---|---|---|---|---|
| Gewichtsverlust nach 5 h bei 200°C in % | 2,9 | 3,9 | 2,6 | 1,4 | 3,3 | 4,8 |
| Schmelzviskosität bei 180°C (Pa\|s) | 15,5 | 6,5 | 18,9 | 9,5 | 7,9 | 0,8 |
| Erweichungspunkt nach KSN (°C) | 106 | 101 | 113 | 109 | 86 | 62 |
| Blockfestigkeit bei 23°C bei 50°C | sehr gut<br>sehr gut | sehr gut<br>sehr gut | sehr gut<br>sehr gut | sehr gut<br>sehr gut | sehr gut<br>gut | ungenügend<br>ungenügend |
| K-Wert (1%-ig in Essigester) | 20,1 | 19,3 | 18,5 | 20,7 | 22,7 | 19,0 |

Beispiel 9

90 Teile Styrol, 10 Teile Maleinsäuremono-n-butylester und 0,5 Teile tert.-Dodecylmercaptan weden mit 20 Teilen eines handelsüblichen Weichmachers auf Basis von o-Phthalsäure-estern mit $C_9$- bis $C_{11}$-Alkoholen vermischt und mit 1,5 Teilen tert.-Butylperbenzoat aus einem zweiten Zulaufbehälter wie im Beispiel 5 polymerisiert und aufgearbeitet. Kenndaten s. Tabelle 2.

Beispiel 10

Zu 100 Teilen des Mischpolymerisats aus Beispiel 5 werden 28 Teile des Weichmachers aus Beispiel 9 und 2 Teile Kokosfett beigemengt. Das Gemisch wird so lange auf 160°C erwärmt, bis sich eine einheitliche Schmelze bildet. Die Schmelze wird anschließend durch Aufziehen mit einem 3 mm Ziehspalt auf Beton oder Asphalt appliziert. Die Kenndaten des modifizierten Bindemittels sind in Tabelle 3 zusammengefäßt.

TABELLE 3

Kenndaten des modifizierten Bindemittels aus Beispiel 10 und 11

|  | Beispiel 10 | Beispiel 11 | Vergleichsprodukt C |
|---|---|---|---|
| Weichmacherzusatz auf Polymerisatbindemittel | 30 % (= 28 Teile Weichmacher auf Basis Phthalsäureester + 2 Teile Kokosfett) | 48 % | — |
| Schmelzviskosität bei 180°C (Pa\|s) | 0,65 | 1,0 | 0,8 |
| Shore-Härte A bei 23°C nach 15" Belastung | 59 | 65 | 39 |
| Schlagfestigkeit bei 23°C (Fallhöhe eines Rundbolzens von 109 g in cm) | 22—23 | 42—46 | 7—11 |

## 0 001 779

### Beispiel 11

100 Teile des Mischpolymerisats aus Beispiel 10 werden mit 23 Teilen des in Beispiel 9 genannten Weichmachers bei 160°C zu einer einheitlichen Schmelze vermischt. Die Kenndaten der erkalteten Schmelze sind in Tabelle 3 zusammengefäßt.

### Beispiel 12

Herstellung einer lösungsmittelfreien, verspritzbaren Heißschmelzmarkierungsmasse.

30,0 Teile des Copolymerisat/Weichmacher-Gemisches aus Beispiel 10 werden bei Temperaturen zwischen 160 und 200°C aufgeschmolzen und mit

5 Teilen Anatas
11 Teilen Kristobalit-Feinstmehl (0,001 bis 0.02 mm Korndurchmesser)
20 Teilen Kristobalit-Korn 0,02 bis 0,2 mm
19 Teilen Kristobalit-Mischung 0,00 bis 1,0 mm
15 Teilen Reflex-Glasperlen 0,2 bis 0,4 mm

durch intensives Führen gleichmäßig bei dieser Temperatur durchgemischt.

Die so hergestellte pigmentierte Masse zeichnet sich im Vergleich zu eineranalog hergestellten Markierungsmasse aus Vergleichsprodukt C durch niedrigere Schmelzviskosität aus. Sie läßt sich daher schon bei tieferen Temperaturen nach den bekannten Verfahren wie z.B. Verspritzen oder Aufziehen verarbeiten (vgl. Tabelle 4). Die mit einem Ziehschuh aus der Schmelze auf Beton bei 170°C aufgezogene Schmelzmasse ist nach dem Erkalten haftfester, zäher, schlagfester und druckfester als diejenige aus Vergleichsprodukt C.

### TABELLE 4

#### Kennwerte der Heißschmelzmarkierungsmasse

|  | Beispiel 12 | Vergleichsprodukt C |
|---|---|---|
| Viskosität (Pa\|s) | | |
| bei 130°C | 70 | 200 |
| 150°C | 20 | 60 |
| 180°C | 7 | 18 |
| 200°C | 4 | 8 |
| 220°C | 2 | 3 |
| Mindesttemperatur für die Verarbeitung im | | |
| Spritzverfahren | 180°C | 200°C |
| Ziehverfahren | 130°C | 150°C |

### Patentansprüche

1. Bindemittel für physikalisch aus organischer Lösung auftrocknende oder aus der heißen Schmelze aufzubringende Beschichtungsstoffe zur Beschichtung von Metallen, Kunststoffen sowie faserhaltigen und mineralischen Werkstoffen auf der Basis von carboxylgruppenhaltigen Vinylaromat-Copolymerisaten, dadurch gekennzeichnet, daß das Bindemittel ein Copolymerisat ist aus

a) 60 bis 95 Gew.% eines Vinylaromaten,
b) 2 bis 20 Gew.% mindestens einer copolymerisierbaren $\alpha,\beta$-olefinisch ungesättigten Carbonsäure oder eines Halbesters $\alpha,\beta$-olefinisch ungesättigter Dicarbonsäurem mit 1 bis 18 Kohlenstoffatome enthaltenden Monoalkanolen und
c) 0 bis 35 Gew.% mindestens eines Esters der Acrylsäure und/oder Methacrylsäure mit 1 bis 12 Kohlenstoffatome enthaltenden Monoalkanolen,

wobei die Summe der unter a) bis c) genannten Prozentzahlen gleich 100 ist.

2. Bindemittel nach Anspruch 1, dadurch gekennzeichnet, daß eine Säurezahl zwischen 10 und 50 aufweist.

3. Bindemittel nach Anspruch 1, dadurch gekennzeichnet, daß das Copolymerisat einen Erweichungspunkt nach Krämer-Sarnow-Nagel von 100 bis 140°C aufweist.

4. Bindemittel nach einem der vorhergehenden Ansprüche, dadurch gekennzeichnet, daß es 15 bis 30 Gew.% der Komponente c einpolymerisiert enthält.

5. Bindemittel zubereitung dadurch gekennzeichnet, nach einem der vorhergehenden Ansprüche, daß dem als Bindemittel dienenden Copolymerisat 15 bis 80 Gew.-%, bezogen auf das Copolymerisat, Weichmacher zugesetzt ist.

6. Verwendung der Bindemittel zubereitung nach Anspruch 5 für Straßenmarkierungsfarben, die aus 60 bis 90 Gew.-% mindestens eines Pigments und/oder anorganischen Füllstoffs und 10 bis 40 Gew.-% des Gemisches aus Copolymerisat und Weichmacher bestehen.

## Claims

1. A binder for coating compositions, drying on physically from an organic solution or to be applied from a hot melt, for coating metals, plastics and fiber-containing and mineral materials, based on vinylaromatic copolymers containing carboxyl groups, characterized in that the binder is a copolymer composed of

a) 60 to 95% by weight of a vinylaromatic,
b) 2 to 20% by weight of at least one copolymerizable $\alpha,\beta$-olefinically unsaturated carboxylic acid or a half-ester of an $\alpha,\beta$-olefinically unsaturated dicarboxylic acid with a monoalkanol of 1 to 18 carbon atoms, and
c) 0 to 35% by weight of at least one ester of acrylic acid and/or methacrylic acid with a monoalkanol of from 1 to 12 carbon atoms,
the total of the percentages given under a) to c) being 100.

2. A binder as claimed in claim 1, characterized in that it has an acid number between 10 and 50.

3. A binder as claimed in claim 1, characterized in that the copolymer has a softening point according to Krämer-Sarnow-Nagel of from 100 to 140°C.

4. A binder as claimed in any of the foregoing claims, characterized in that it contains 15 to 30% by weight of units of component c.

5. A binder formulation characterized in that the copolymer as claimed in any of the foregoing claims and serving as binder contains, as an addition, 15 to 80% by weight of a plasticizer.

6. The use of the binder formulation as claimed in claim 5 for road marking paints consisting of 60 to 90% by weight of at least one pigment and/or inorganic filler and 10 to 40% by weight of the mixture of copolymer and plasticizer.

## Revendications

1. Liant pour matières de revêtement, applicables sur des métaux, des matières plastiques et des matières fibreuses et minérales, par dessication physique de leur solution organique ou à l'état de masse fondue chaude, à base de copolymères vinyl-aromatiques à groupes carboxyle, caractérisé en ce que le liant est un copolymère formé de:

a) 60 à 95% en poids d'un composé vinyl-aromatique,
b) 2 à 20% en poids d'au moins un acide carboxylique à insaturation $\alpha,\beta$-oléfinique copolymérisable ou d'un hémi-ester d'acides dicarboxyliques à insaturation $\alpha,\beta$-oléfinique et de mono-alcanols en $C_1$ à $C_{18}$ et
c) 0 à 35% en poids d'au moins un ester de l'acide acrylique et(ou) de l'acide méthacrylique et de mono-alcanols en $C_1$ à $C_{12}$,
la somme des pourcentages en poids de a) à c) étant égale à 100.

2. Liant suivant la revendication 1, caractérisé en ce qu'il possède un indice d'acide entre 10 et 50.

3. Liant suivant la revendication 1, caractérisé en ce que le copolymère possède un point de ramollissement selon Kraemer-Sarnow-Nagel compris entre 100 et 140°C.

4. Liant suivant l'une des revendications précédentes, caractérisé en ce que la proportion de la composante c) copolymérisée est de 15 à 30% en poids.

5. Composition de liant suivant l'une des revendications précédentes, caractérisée en ce que l'on a incorporé au copolymère servant de liant entre 15 et 80% de son poids d'un ou de plusieurs plastifiants.

6. Utilisation d'une composition de liant suivant la revendication 5 dans des peintures pour le marquage des chaussées, composées de 60 à 90% en poids d'au moins un pigment et(ou) d'au moins une matière de charge minérale et de 10 à 40% en poids du mélange de copolymère et de plastifiant.